# EUROPEAN PATENT APPLICATION

(11) **EP 4 742 278 A1**
(43) Date of publication of application: **13.05.2026**
(21) Application number: 24839567.5
(22) Date of filing: 01.07.2024
(51) Int. Cl.: H01B 13/00, C01B 25/14, H01B 1/06, H01B 1/10

(54) **METHOD FOR PRODUCING SULFIDE SOLID ELECTROLYTE AND METHOD FOR REUSING SAME**

(30) Priority: 07.07.2023 JP 2023112311
(71) Applicant: AGC INC., Chiyoda-ku, Tokyo 1008405 (JP)
(72) Inventor: SEKI Hidenobu, Tokyo 100-8405 (JP)
(74) Representative: Müller-Boré & Partner Patentanwälte PartG mbB
(86) International application number: PCT/JP2024/023754
(87) International publication number: WO 2025/013675

(57) **Abstract**

The purpose of the present invention is to provide a method for, by using a sulfide solid electrolyte, producing a new sulfide solid electrolyte. The present invention pertains to a method for producing a sulfide solid electrolyte, the method comprising: heating and melting a wet-ground first sulfide solid electrolyte to obtain a melt; removing carbon from the melt; and cooling the carbon-removed melt to obtain a second sulfide solid electrolyte.

## Description

### TECHNICAL FIELD

The present invention relates to a method for producing a sulfide solid electrolyte and a method for reusing a sulfide solid electrolyte.

### BACKGROUND ART

Lithium ion secondary batteries are widely used in portable electronic devices such as a mobile phone and a laptop computer. In the related art, a liquid electrolyte has been used in a lithium ion secondary battery. On the other hand, in recent years, an all-solid-state lithium ion secondary battery in which a solid electrolyte is used as an electrolyte of the lithium ion secondary battery has attracted attention from the viewpoint that improvement of safety, highspeed charging and discharging, and a reduction in size of a case can be expected. Examples of the solid electrolyte used in the all-solid-state lithium ion secondary battery include a sulfide solid electrolyte.

Performance of an inorganic solid electrolyte such as a sulfide solid electrolyte may greatly vary due to a slight composition deviation. When the composition deviation deviates beyond an allowable error, the solid electrolyte has to be discarded as being out of specification. Therefore, there is a demand for a method capable of preventing the composition deviation and producing a sulfide solid electrolyte without waste of raw material resources. For example, Patent Literature 1 discloses a method for eliminating a composition deviation by bringing a sulfide solid electrolyte having the composition deviation into contact with an alkali metal sulfide or the like by using a solid phase method.

In addition to the case where the composition deviation occurs, there is a demand for separately producing a new sulfide solid electrolyte by reusing the once obtained sulfide solid electrolyte.

### CITATION LIST

### PATENT LITERATURE

Patent Literature 1: JP2015-5372A

### SUMMARY OF INVENTION

### TECHNICAL PROBLEM

However, in the case of separately producing a new sulfide solid electrolyte by reusing the sulfide solid electrolyte by using the solid phase method, there are problems that a solid phase reaction takes time and it is difficult to obtain a sulfide solid electrolyte having a uniform composition. In addition, in the case of the solid phase method, since the step is easily influenced by a particle diameter of the original electrolyte to be reused, it is difficult to control the particle diameter to be newly obtained. Therefore, although recovery of a lithium ion conductivity can be realized, it is difficult to reuse the electrolyte in the case where the particle diameter is out of specification. Further, in the case of a dry reaction, a residual solvent adheres to the electrolyte, which causes a problem of reaction inhibition.

The present invention has been made in view of the above circumstances, and object thereof is to provide a method for producing a new sulfide solid electrolyte by using a sulfide solid electrolyte.

### SOLUTION TO PROBLEM

The present inventors have focused on a method for reusing a sulfide solid electrolyte by using a melting method. According to the melting method, the reaction time can be shortened as compared with the solid phase method, and a sulfide solid electrolyte having a uniform composition is easily obtained. In addition, since the sulfide solid electrolyte is once formed into a melt, the problem of particle diameter control as in the solid phase method does not occur.

On the other hand, in the case of melting the sulfide solid electrolyte obtained after wet pulverization for reuse, carbon derived from the solvent during the wet pulverization remains in the electrolyte, and thus the carbon changes to inorganic carbon (elemental carbon) during the melting. It has been found that when inorganic carbon remains in the electrolyte, electron conductivity is exhibited, and thus a separator cannot function as a battery.

Based on the above findings, the present inventors have intensively studied and found that a sulfide solid electrolyte having an excellent lithium ion conductivity can be obtained through a step of removing carbon from a melt obtained by heating and melting a wet-pulverized sulfide solid electrolyte, and have completed the present invention.

That is, the present invention relates to a method for producing a sulfide solid electrolyte, including: heating and melting a wet-pulverized first sulfide solid electrolyte to obtain a melt, and removing carbon from the melt; and cooling the carbon-removed melt to obtain a second sulfide solid electrolyte.

### ADVANTAGEOUS EFFECTS OF INVENTION

According to the present invention, a sulfide solid electrolyte having an excellent lithium ion conductivity can be produced by a melting method using a sulfide solid electrolyte.

### BRIEF DESCRIPTION OF DRAWINGS

FIG. 1 is a flowchart of a method for producing a sulfide solid electrolyte according to an embodiment of the present invention.
FIG. 2 is a diagram showing a result of AC impedance measurement in Examples.

### DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

### <Method for Producing Sulfide Solid Electrolyte>

A method for producing a sulfide solid electrolyte according to an embodiment of the present invention (hereinafter, also referred to as the present production method) includes: heating and melting a wet-pulverized first sulfide solid electrolyte to obtain a melt, and removing carbon from the melt; and cooling the carbon-removed melt to obtain a second sulfide solid electrolyte.

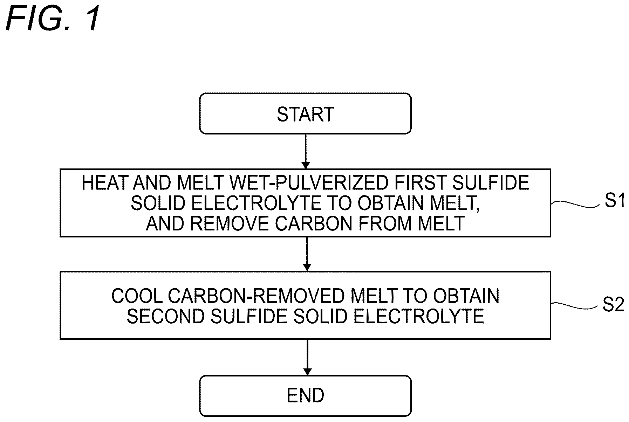

FIG. 1 shows a flowchart of the present production method. In the present production method, the wet-pulverized first sulfide solid electrolyte is heated and melted to obtain a melt, carbon is removed from the melt (step S1), and the carbon-removed melt is cooled to obtain a second sulfide solid electrolyte (step S2).

### [Wet-pulverized First Sulfide Solid Electrolyte]

In the present production method, a wet-pulverized first sulfide solid electrolyte (hereinafter, also simply referred to as a first sulfide solid electrolyte) is used. As described above, carbon derived from a solvent used in wet pulverization remains in the first sulfide solid electrolyte. Therefore, carbon as an organic component changes to inorganic carbon during the melting, and electron conductivity is exhibited in the obtained electrolyte. Therefore, in the present invention, through the step of removing carbon from the melt, the electron conductivity due to inorganic carbon is prevented from exhibiting, and a sulfide solid electrolyte having an excellent lithium ion conductivity is produced.

Hereinafter, an example of a method for producing the first sulfide solid electrolyte is described, but the present invention is not limited to this method.

### (Sulfide Solid Electrolyte Raw Material)

As the first sulfide solid electrolyte, a commercially available sulfide solid electrolyte may be used, or a sulfide solid electrolyte produced from a sulfide solid electrolyte raw material may be used. As the sulfide solid electrolyte raw material, a commercially available sulfide solid electrolyte raw material may be used, or a sulfide solid electrolyte raw material produced from a material may be used. The sulfide solid electrolyte raw material may be subjected to a known pretreatment.

### Hereinafter, the sulfide solid electrolyte raw material is specifically described.

The sulfide solid electrolyte raw material usually contains an alkali metal element (R) and a sulfur element (S).

Examples of the alkali metal element (R) include a lithium element (Li), a sodium element (Na), and a potassium element (K), and among them, the lithium element (Li) is preferred. As an alkali metal element (R) source, substances (components) containing an alkali metal element such as elemental alkali metal element and compounds containing an alkali metal element can be appropriately combined and used. Among them, as the lithium element, Li-containing substances (components), such as elemental Li and a Li-containing compound, can be appropriately combined and used.

Examples of the lithium element (Li)-containing substance include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metal lithium. As the lithium element (Li)-containing substance, it is preferable to use lithium sulfide from the viewpoint of obtaining a sulfide material.

As a sulfur element (S) source, S-containing substances (components), such as elemental S and a S-containing compound, can be appropriately combined and used. The sulfur element (S)-containing substance may be used alone or in combination of two or more kinds thereof.

Examples of the sulfur element (S)-containing substance include phosphorus sulfides such as phosphorus trisulfide (P₂S₃) and phosphorus pentasulfide (P₂S₅), other sulfur compounds containing phosphorus, elemental sulfur, and a sulfur-containing compound. Examples of the sulfur-containing compound include H₂S, CS₂, iron sulfides (such as FeS, Fe₂S₃, FeS₂, and Fe₁₋ₓS), bismuth sulfide (Bi₂S₃), and copper sulfides (such as CuS, Cu₂S, and Cu₁₋ₓS). From the viewpoint of obtaining a sulfide material, the sulfur element (S)-containing substance is preferably a phosphorus sulfide, and more preferably phosphorus pentasulfide (P₂S₅). These may be used alone or in combination of two or more kinds thereof. The phosphorus sulfide can be considered as a compound that serves as both the S-containing substance and a P-containing substance to be described later.

From the viewpoint of improving the ion conductivity and the like of the obtained sulfide solid electrolyte, it is preferable that the sulfide solid electrolyte raw material further contains a phosphorus element (P). As a phosphorus element (P) source, P-containing substances (components), such as elemental P and a P-containing compound, can be appropriately combined and used.

Examples of the phosphorus element (P)-containing substance include phosphorus sulfides such as phosphorus trisulfide (P₂S₃) and phosphorus pentasulfide (P₂S₅), phosphorus compounds such as sodium phosphate (Na₃PO₄), and elemental phosphorus. As the phosphorus element (P)-containing substance, a phosphorus sulfide having high volatility is preferred, and phosphorus pentasulfide (P₂S₅) is more preferred, from the viewpoint of exerting the effects of the present invention more effectively. These may be used alone or in combination of two or more kinds thereof.

The sulfide solid electrolyte raw material may be obtained as a mixed raw material by, for example, appropriately mixing the above substances according to a composition of a target sulfide solid electrolyte. A mixing ratio is not particularly limited, and for example, a molar ratio S/R of the sulfur element (S) to the alkali metal element (R) in the sulfide solid electrolyte raw material is preferably 0.65/0.35 or less, and more preferably 0.5/0.5 or less, from the viewpoint of improving the ion conductivity and the like of the obtained sulfide solid electrolyte. The mixed raw material is preferably obtained by mixing the above substances in a predetermined stoichiometric mixture ratio according to the substances used for the mixing. Examples of a mixing method include mixing in a mortar, mixing using a medium such as a planetary ball mill, and medium-less mixing such as a pin mill, a powder stirrer, and air flow mixing.

Examples of a preferred combination of the alkali metal element and the sulfur element contained in the sulfide solid electrolyte raw material include a combination of Li₂S and P₂S₅. In the case of a combination of Li₂S and P₂S₅, a molar ratio Li/P of Li to P is preferably 40/60 or more, and more preferably 50/50 or more. The molar ratio Li/P of Li to P is preferably 88/12 or less. The molar ratio Li/P of Li to P is preferably 40/60 to 88/12, and more preferably 50/50 to 88/12. When the mixing ratio is adjusted such that the amount of P₂S₅ is relatively smaller than Li₂S, it is easier to prevent volatilization of the sulfur component and the phosphorus component during a heat treatment due to a lower boiling point of P₂S₅ compared to a melting point of Li₂S.

On the other hand, a lithium compound other than lithium sulfide, metal lithium, or the like may be used. Specifically, in this case, the sulfide solid electrolyte raw material preferably contains one or more selected from the group consisting of metal lithium, lithium iodide (LiI), lithium carbonate (Li₂CO₃), lithium sulfate (Li₂SO₄), lithium oxide (Li₂O), and lithium hydroxide (LiOH) as the Li-containing substance. These may be used alone or in combination of two or more kinds thereof.

The sulfide solid electrolyte raw material may contain further substances (compounds and the like) in addition to the above substances depending on the composition of the target sulfide solid electrolyte or as additives or the like.

For example, in the case of producing a sulfide solid electrolyte containing a halogen element such as F, Cl, Br, or I, the sulfide solid electrolyte raw material preferably contains a halogen element (Ha). In this case, the sulfide solid electrolyte raw material preferably contains a compound containing a halogen element. Examples of the compound containing a halogen element include lithium halides such as lithium fluoride (LiF), lithium chloride (LiCl), lithium bromide (LiBr), and lithium iodide (LiI), a phosphorus halide, a phosphoryl halide, a sulfur halide, a sodium halide, and a boron halide. As the compound containing a halogen element, a lithium halide is preferred, and LiCl, LiBr, and LiI are more preferred, from the viewpoint of reactivity of the raw materials. These may be used alone or in combination of two or more kinds thereof.

An alkali metal halide such as a lithium halide is also the compound containing an alkali metal element such as Li. In the case where the sulfide solid electrolyte raw material contains an alkali metal halide, a part or all of the alkali metal element such as Li in the sulfide solid electrolyte raw material may be derived from the alkali metal halide such as a lithium halide.

In the case where the sulfide solid electrolyte raw material contains the halogen element (Ha) and the phosphorus element (P), a molar equivalent of Ha with respect to P in the sulfide solid electrolyte raw material is preferably 0.2 molar equivalents or more, and more preferably 0.5 molar equivalents or more, from the viewpoint of improving the ion conductivity and the like of the obtained sulfide solid electrolyte. The molar equivalent of Ha is preferably 4 molar equivalents or less, and more preferably 3 molar equivalents or less, from the viewpoint of stability of the obtained sulfide solid electrolyte.

The obtained sulfide solid electrolyte may be an amorphous sulfide solid electrolyte depending on the purpose, and from the viewpoint of improving ease of generation of an amorphous phase, it is also preferable that the sulfide solid electrolyte raw material contains sulfides such as SiS₂, B₂S₃, GeS₂, and Al₂S₃. By facilitating the generation of the amorphous phase, in the case of obtaining the amorphous substance by rapid cooling, the amorphous sulfide solid electrolyte can be obtained even when a cooling rate is decreased, thereby reducing a load on an apparatus.

From the viewpoint of imparting moisture resistance to the sulfide solid electrolyte, it is also preferable that oxides such as SiO₂, B₂O₃, GeO₂, Al₂O₃, P₂O₅ are contained. These may be used alone or in combination of two or more kinds thereof.

### (Solid Phase Method and Melting Method)

Examples of the method for producing the first sulfide solid electrolyte using the sulfide solid electrolyte raw material include a method using a solid phase method and a method using a melting method. Hereinafter, the method using the solid phase method and the method using the melting method are described separately.

### (Solid Phase Method)

In the solid phase method, first, sulfide solid electrolyte raw materials are mixed. The mixing can be performed by adopting a well-known method, and mixing by mechanical milling is preferred. In the case of using the mechanical milling method using a ball mill, examples thereof include a rotary ball mill that provides a rotation movement to a container, a vibrating ball mill that provides a vibrational movement to a container, a planetary ball mill that provides a revolution and rotation movement to a container, a bead mill, and Attritor (registered trademark). Among them, a planetary ball mill or a bead mill having a higher mixing force or pulverizing force is preferred.

The ball mill may be dry mixing or wet mixing using a dispersion medium, and dry mixing is preferred from the viewpoint of efficiently transmitting energy.

The raw materials are mixed by the above mixing to form a raw material mixture. The raw material mixture is a precursor of the sulfide solid electrolyte. The precursor may be a homogeneous amorphous intermediate compound that has been amorphized by adopting mixing conditions severer than those in the related art. The amorphous intermediate compound means that no XRD peak derived from the raw materials is observed.

In the present production method, the raw material mixture is wet-pulverized to be the first sulfide solid electrolyte. The wet pulverization may be performed together with the mixing (wet mixing) of the sulfide solid electrolyte raw materials described above. For the wet pulverization, pulverization is performed in a solvent using a medium or bead mill made of alumina, zirconia, or the like, and a well-known method in this field can be adopted. In the present production method, a solvent containing carbon is used, and examples thereof include alkanes such as heptane, hexane, and octane, aromatic hydrocarbons such as benzene, toluene, and xylene, and ether compounds having 2 to 20 carbon atoms such as diethyl ether, dibutyl ether, and anisole.

In the wet pulverization, an average particle diameter of the pulverized sulfide solid electrolyte is preferably 1 µm to 100 µm. Here, the average particle diameter refers to a median diameter (D50) determined from a volume-based particle size distribution chart obtained by measuring a particle size distribution using a particle size distribution meter using a laser diffraction method, which means a particle diameter at which 50 vol% of particles have a particle diameter equal to or less than the value.

### (Melting Method)

In the melting method, first, the sulfide solid electrolyte raw materials are mixed to obtain a raw material mixture. The mixing may be performed by, for example, mixing in a mortar, mixing using a medium such as a planetary ball mill, and medium-less mixing such as a pin mill, a powder stirrer, and air flow mixing.

Subsequently, the raw material mixture obtained above is heated to obtain a molten material.

A specific method of heating and melting the raw material mixture is not particularly limited. For example, the raw material mixture is charged into a heat-resistant container and heated in a heating furnace. The raw material mixture may be sealed in the heat-resistant container. The melting may be performed in an atmosphere containing a sulfur element or the like. Examples of the atmosphere containing a sulfur element include a mixed gas atmosphere containing an inert gas and a sulfur element-containing gas such as a sulfur gas, a hydrogen sulfide gas, or a sulfur dioxide gas.

As the heat-resistant container, a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide may be used. These heat-resistant containers may have a bulk formed of the above material, or may be a container having a layer made of carbon, an oxide, a nitride, a carbide, or the like, such as a carbon-coated quartz tube.

A heating temperature when heating and melting the raw material mixture varies depending on the raw materials used and a composition of the raw material mixture, and is, for example, preferably 550°C to 1000°C, more preferably 600°C to 950°C, still more preferably 630°C to 900°C, and particularly preferably 650°C to 800°C. Here, the heating temperature is preferably 550°C or higher, more preferably 600°C or higher, still more preferably 630°C or higher, and particularly preferably 650°C or higher, from the viewpoint of improving a melting property of the raw materials and homogenizing the melt in a short time. The heating temperature is preferably 1000°C or lower, more preferably 950°C or lower, still more preferably 900°C or lower, and particularly preferably 800°C or lower, from the viewpoint of preventing deterioration of components caused by heating, preventing a composition deviation caused by volatilization of components, and from the viewpoint of further preventing decomposition.

A time for the heating and melting varies depending on a scale, and is preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or longer, more preferably 30 minutes or longer, still more preferably 45 minutes or longer, and particularly preferably 1 hour or longer, from the viewpoint of allowing the reaction to proceed smoothly. The time for the heating and melting is preferably 10 hours or shorter, more preferably 9.5 hours or shorter, and still more preferably 9 hours or shorter, from the viewpoint of productivity.

A pressure during the heating and melting is not particularly limited, and, for example, a normal pressure or a slight pressure is preferred, and a normal pressure is more preferred.

A dew point during the heating and melting is preferably -20°C or lower, and a lower limit thereof is not particularly limited and is usually about -80°C. An oxygen concentration is preferably 1000 ppm by volume or less.

Whether the molten material is completely melted can be checked by the absence of a peak derived from a crystal in high-temperature X-ray diffraction measurement.

Subsequently, the molten material is cooled. The cooling may be performed by any known method, and a method thereof is not particularly limited. In order to increase a cooling rate, it is preferable to use a twin roller, which is generally considered to have the fastest quenching rate.

The cooling rate is preferably 0.01°C/sec or more, more preferably 0.05°C/sec or more, and still more preferably 0.1°C/sec or more, from the viewpoint of maintaining the composition obtained by the heating and melting. The upper limit value of the cooling rate is not particularly limited, and a cooling rate of the twin roller is, for example, 1,000,000°C/sec or less.

In the case where the obtained solid is intended to be an amorphous sulfide solid electrolyte, it is preferable to quench the melt obtained by the heating and melting. The cooling rate in the case of quenching is preferably 10°C/sec or more, more preferably 100°C/sec or more, still more preferably 500°C/sec or more, and particularly preferably 700°C/sec or more. The upper limit value of the cooling rate is not particularly limited, and the cooling rate of the twin roller is, for example, 1,000,000°C/sec or less.

On the other hand, it is also possible to obtain a sulfide solid electrolyte having a specific crystal structure or a sulfide solid electrolyte including a crystal phase and an amorphous phase by performing slow cooling in the cooling step to crystallize at least a part of the solid. The cooling rate in the case of the slow cooling is preferably 0.01°C/sec or more, and more preferably 0.05°C/sec or more. The cooling rate is preferably 500°C/sec or less, and more preferably 450°C/sec or less. The cooling rate may be 10°C/sec or less, or may be 5°C/sec or less. The cooling rate may be appropriately adjusted according to crystallization conditions.

Here, a crystal of the sulfide solid electrolyte is preferably an ion conductive crystal. Specifically, the ion conductive crystal is a crystal having a lithium ion conductivity of more than 1.0 × 10⁻⁴ S/cm, and more preferably more than 1.0 × 10⁻³ S/cm.

In the case where the solid obtained after the cooling is intended to be a sulfide solid electrolyte including a crystal phase, it is preferable that the melt obtained in the heating and melting step contains a compound that serves as a crystal nucleus. Accordingly, it is easier for the crystal to precipitate in the cooling step. The method for containing the compound that serves as a crystal nucleus in the melt is not particularly limited, and examples thereof include a method of adding the compound that serves as a crystal nucleus to the raw material or an intermediate, and a method of adding the compound that serves as a crystal nucleus to the melt during the heating and melting.

Examples of the compound that serves as a crystal nucleus include oxides, oxynitrides, nitrides, carbides, other chalcogen compounds, and halides. The compound that serves as a crystal nucleus is preferably a compound having a certain degree of compatibility with the melt. A compound completely incompatible with the melt cannot serve as a crystal nucleus.

In the case where the solid obtained after the cooling is intended to be the sulfide solid electrolyte including a crystal phase, a content of the compound that serves as a crystal nucleus in the melt is preferably 0.01 mass% or more, more preferably 0.1 mass% or more, and still more preferably 1 mass% or more. On the other hand, the content of the compound that serves as a crystal nucleus in the melt is preferably 20 mass% or less, and more preferably 10 mass% or less, from the viewpoint of preventing a decrease in lithium ion conductivity.

In the case where the solid obtained after the cooling is intended to be an amorphous sulfide solid electrolyte, it is preferable that the melt does not contain any compound that serves as a crystal nucleus, or that a content of the compound is a predetermined amount or less. Specifically, the content of the compound that serves as a crystal nucleus in the melt is preferably 1 mass% or less, and more preferably 0.1 mass% or less. The content of the compound that serves as the crystal nucleus in the melt may be 0.01 mass% or less.

The cooling is preferably performed under a normal pressure. The normal pressure means that the pressure is not controlled during the cooling. Specifically, the pressure is about 0.8 atm to 1.2 atm.

In the present production method, the raw material mixture is wet-pulverized to be the first sulfide solid electrolyte. The wet pulverization can be performed by a method same as the method described in the solid phase method.

### (First Sulfide Solid Electrolyte)

A crystal structure of the wet-pulverized first sulfide solid electrolyte obtained through the above step is not particularly limited. Examples thereof include powders of a sulfide solid electrolyte having a crystal structure containing a Li element, a P element, and a S element called an LPS-based crystal structure, such as Li₇P₃S₁₁, a sulfide solid electrolyte having a crystal structure containing a Li element, a Ge element, a P element, and a S element called an LGPS-based crystal structure, such as Li₁₀GeP₂S₁₂, a sulfide solid electrolyte having an argyrodite crystal structure containing a Li element, a P element, a S element, and a Ha element, a sulfide solid electrolyte made of a Li-P-S-Ha-based crystallized glass, and a sulfide solid electrolyte having other crystal structures.

The sulfide solid electrolyte may include a crystal phase and an amorphous phase.

Among them, the argyrodite crystal structure is a crystal structure of a group of compounds derived from a mineral represented by a composition formula Ag₈GeS₆. The sulfide solid electrolyte is not limited to having the above crystal structures, and some elements may be substituted with other elements.

In the case where the sulfide solid electrolyte has an argyrodite crystal structure, the sulfide solid electrolyte more preferably contains, as the Ha element, at least one kind of element selected from the group consisting of Cl, Br, and I, and still more preferably contains two or more kinds of elements selected from the above group.

The sulfide solid electrolyte still more preferably contains at least one of Cl and Br, and even more preferably contains Cl and Br, as the Ha element.

The argyrodite crystal structure preferably has the above structure, and it is preferable that the composition formula is represented by Li_{α}PS_{β}Ha_{γ} and satisfies relationships of 5 *≤* α ≤ 7, 4 ≤ β ≤ 6, and 1.3 ≤ γ ≤ 2. Such an element ratio more preferably satisfies relationships of 5.1 < α < 6.3, 4 < β < 5.3, and 1.4 ≤ γ ≤ 1.9, and still more preferably satisfies relationships of 5.2 < α < 6.2, 4.1 < β < 5.2, and 1.5 ≤ γ ≤ 1.8.

That is, α is preferably 5 or more, more preferably more than 5.1, still more preferably more than 5.2, and is preferably 7 or less, more preferably less than 6.3, still more preferably less than 6.2. β is preferably 4 or more, more preferably more than 4, still more preferably more than 4.1, and is preferably 6 or less, more preferably less than 5.3, still more preferably less than 5.2. γ is preferably 1.3 or more, more preferably 1.4 or more, still more preferably 1.5 or more, and is preferably 2 or less, more preferably 1.9 or less, still more preferably 1.8 or less.

In the argyrodite crystal structure, a part of the S element may be substituted with the Ha element, an O element, Se, Te, BH₄, CN, or the like. Further, a part of the P element may be substituted with a Si element, an Al element, a Sn element, an In element, a Cu element, a Sb element, a Ge element, or the like.

As described above, the first sulfide solid electrolyte in the present production method contains carbon as an organic component derived from the solvent used in the wet pulverization. A carbon amount is, for example, preferably 3 mass% or less, more preferably 1.5 mass% or less, and still more preferably 1 mass% or less with respect to the first sulfide solid electrolyte. The carbon amount means the amount of carbon element in the first sulfide solid electrolyte, and can be measured by, for example, an oxygen stream combustion-infrared absorption method using a sulfur carbon analyzer (CS844 manufactured by LECO JAPAN CORPORATION).

### [Heating and Melting]

In the present production method, the wet-pulverized first sulfide solid electrolyte is heated and melted to obtain a melt. As the heating and melting method, a method same as the heating and melting in the melting method described above can be adopted.

The heating and melting of the first sulfide solid electrolyte may be performed together with the sulfide solid electrolyte raw material. In this case, a mixture obtained by mixing the first sulfide solid electrolyte and the sulfide solid electrolyte raw material may be heated and melted, the sulfide solid electrolyte raw material may be added to a melt obtained by heating and melting the first sulfide solid electrolyte, or the first sulfide solid electrolyte may be added to a melt obtained by heating and melting the sulfide solid electrolyte raw material. From a different point of view, this means that, in the case of producing a sulfide solid electrolyte by a melting method using a sulfide solid electrolyte raw material, the sulfide solid electrolyte raw material may be heated and melted together with the wet-pulverized first sulfide solid electrolyte.

As the sulfide solid electrolyte raw material to be heated and melted together with the first sulfide solid electrolyte, a raw material same as the sulfide solid electrolyte raw material described in the above section of [Wet-pulverized First Sulfide Solid Electrolyte] can be used.

The temperature for the heating and melting of the first sulfide solid electrolyte is preferably 600°C or higher, and more preferably 700°C or higher, from the viewpoint of homogeneity of the melt. The temperature for the heating and melting is preferably 1000°C or lower, more preferably 950°C or lower, still more preferably lower than 900°C, and particularly preferably lower than 800°C, from the viewpoint of preventing deterioration or decomposition due to heating of the components in the melt. The temperature is preferably 600°C or higher and lower than 1000°C.

### [Carbon Removal]

In the present production method, carbon is removed from the melt obtained by heating and melting the first sulfide solid electrolyte. Here, "removing" carbon from the melt means reducing the carbon amount in the melt, and is not limited to completely eliminating carbon in the melt. For example, the carbon amount in the melt may be reduced by 0.5 mass% or more or 0.1 mass% or more in terms of amounts before and after the removal.

The method for removing carbon from the melt is not particularly limited, and examples thereof include the following method 1 and method 2.

### (Method 1)

Examples of the method 1 include a method of removing carbon from the melt by introducing a sulfur source into the melt. By introducing the sulfur source into the melt, carbon in the melt reacts with sulfur in the sulfur source, and carbon in the melt is discharged and removed as a CS₂ gas. Examples of the sulfur source include elemental sulfur, organic sulfur compounds such as hydrogen sulfide and carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and a rubber subjected to a sulfur vulcanization treatment. As the sulfur source, elemental sulfur is particularly preferred.

As a method of introducing the sulfur source into the melt, for example, the sulfur source may be introduced as a gas into the melt, or a powder of the sulfur source may be introduced into the melt.

As a method of introducing the sulfur source as a gas into the melt, a well-known method can be adopted, and examples thereof include a method of heating a sulfur powder at 200°C or higher and 400°C or lower and introducing a vaporized sulfur gas into the melt.

Examples of the method of introducing a powder of the sulfur source into the melt include a method of adding the powder directly above the melt using a constant supply feeder. The powder preferably has an average particle diameter of 1 µm to 5000 µm from the viewpoint of homogenization. The average particle diameter is preferably 1 µm or more, more preferably 10 µm or more, still more preferably 100 µm or more, and is preferably 5000 µm or less, more preferably 2500 µm or less, still more preferably 1000 µm or less. Here, the average particle diameter refers to a median diameter (D50) determined from a volume-based particle size distribution chart obtained by measuring a particle size distribution using a particle size distribution meter using a laser diffraction method, which means a particle diameter at which 50 vol% of particles have a particle diameter equal to or less than the value.

A sulfur amount B to be introduced with respect to a carbon amount A in the first sulfide solid electrolyte, that is, the carbon amount A in the melt, preferably satisfies A/B ≤ 0.2, and more preferably satisfies A/B ≤ 0.1 in weight ratio. Here, the carbon amount A means the amount of the carbon element in the first sulfide solid electrolyte or the melt. The sulfur amount B means the amount in terms of the sulfur element in the sulfur source to be introduced. A/B is more preferably 0.05 or less, still more preferably 0.03 or less, and particularly preferably 0.01 or less.

The carbon amount A and the sulfur amount B can be measured by, for example, an oxygen stream combustion-infrared absorption method using a sulfur carbon analyzer (CS844 manufactured by LECO JAPAN CORPORATION).

By introducing the sulfur source into the melt by using the method 1, carbon in the melt can be removed, and by introducing sulfur, a change in composition of sulfur due to volatilization can be prevented.

### (Method 2)

Examples of the method 2 include a method of removing carbon from the melt by introducing a sulfur source into the first sulfide solid electrolyte and heating and melting the first sulfide solid electrolyte. By introducing the sulfur source into the first sulfide solid electrolyte, carbon in the melt reacts with sulfur in the sulfur source during the subsequent heating and melting, and carbon in the melt is discharged and removed as a CS₂ gas. The sulfur source and the method for introducing the sulfur source may be the same as those in the method 1. Among them, in the method 2, it is preferable to use a sulfur powder as the sulfur source, and it is preferable to introduce (add) a powder of the sulfur source into the first sulfide solid electrolyte and then mix the two.

Also in the method 2, the sulfur amount B to be introduced with respect to the carbon amount A in the first sulfide solid electrolyte preferably satisfies A/B ≤ 0.2, and more preferably satisfies A/B ≤ 0.1 in weight ratio. Here, the carbon amount A means the amount in terms of the carbon element in the first sulfide solid electrolyte or the melt. The sulfur amount B means the amount in terms of the sulfur element in the sulfur source to be introduced. A/B is more preferably 0.05 or less, still more preferably 0.03 or less, and particularly preferably 0.01 or less.

The carbon amount A and the sulfur amount B can be measured by, for example, an oxygen stream combustion-infrared absorption method using a sulfur carbon analyzer (CS844 manufactured by LECO JAPAN CORPORATION).

In the method 2, as in the method 1, by introducing the sulfur source into the first sulfide solid electrolyte, carbon in the melt can also be removed during the subsequent heating and melting, and a change in composition of sulfur due to volatilization can also be prevented by introducing sulfur.

### [Cooling]

The present production method includes a step of cooling the carbon-removed melt obtained in the above method. Accordingly, a second sulfide solid electrolyte to be described later is obtained. The cooling of the melt can be performed by a method same as the method described in the above section of [Wet-pulverized First Sulfide Solid Electrolyte].

### [Second Sulfide Solid Electrolyte]

As described above, the carbon-removed melt is cooled to obtain the second sulfide solid electrolyte. Examples of the second sulfide solid electrolyte include those same as those described in the above section of [Wet-pulverized First Sulfide Solid Electrolyte].

A lithium ion conductivity of the second sulfide solid electrolyte is preferably 1.0 × 10⁻⁴ S/cm or more, more preferably 5.0 × 10⁻⁴ S/cm or more, still more preferably 1.0 × 10⁻³ S/cm or more, and particularly preferably 5.0 × 10⁻³ S/cm or more, from the viewpoint of improving battery properties when used in a lithium ion secondary battery.

The lithium ion conductivity is measured using an AC impedance measurement device (for example, potentiostat/galvanostat VSP, manufactured by Bio-Logic Sciences Instruments) under the following measurement conditions: measurement frequency: 100 Hz to 1 MHz, measurement voltage: 100 mV, measurement temperature: 25°C.

The obtained second sulfide solid electrolyte can be identified by analyzing the crystal structure by X-ray diffraction (XRD) measurement, and analyzing the elemental composition using various methods such as ICP emission spectrometry, atomic absorption spectrometry, and ion chromatography. For example, P and S can be measured by ICP emission spectrometry, Li can be measured by atomic absorption spectrometry, and Ha can be measured by ion chromatography.

### [Annealing Treatment]

In the case where the second sulfide solid electrolyte obtained by cooling the carbon-removed melt is an amorphous sulfide solid electrolyte or a sulfide solid electrolyte including an amorphous phase, the present production method may further include subjecting the second sulfide solid electrolyte to an annealing treatment. By subjecting a sulfide solid electrolyte containing a sulfide solid electrolyte crystal to an annealing treatment, ions in the crystal structure can be re-arranged, and the lithium ion conductivity can be improved. The annealing treatment refers to at least one of subjecting the second sulfide solid electrolyte obtained by the cooling to an annealing treatment for crystallization and re-arranging the ions in the crystal structure. Here, a heat treatment for the amorphous sulfide solid electrolyte or the sulfide solid electrolyte including an amorphous phase, including a crystallization treatment, is referred to as the annealing treatment.

The annealing treatment is performed by heating at preferably 340°C or higher, more preferably at 380°C or higher, and may be performed by heating at 550°C or lower, or at 500°C or lower.

### [Solid Phase Reaction]

In the present production method, a composition of the second sulfide solid electrolyte may be further adjusted by appropriately adding another sulfide solid electrolyte or a sulfide solid electrolyte raw material to the second sulfide solid electrolyte. As a method for adjusting the composition, for example, a method described in JP2015-5352A or the like can be adopted.

### [Continuous Process]

In the present production method, the heating and melting of the first sulfide solid electrolyte and the cooling of the carbon-removed melt are preferably performed as a continuous process. For example, the carbon-removed melt obtained in the furnace is continuously discharged, and the process proceeds to the cooling step to continuously produce the second sulfide solid electrolyte. Accordingly, a series of steps, including charging and heating and melting of the first sulfide solid electrolyte, and discharging and cooling the melt, can be performed continuously, and it is possible to produce a large amount of the second sulfide solid electrolyte more efficiently in a short time. Specifically, it is preferable to continuously perform a series of steps including heating and melting the first sulfide solid electrolyte raw material in the furnace to obtain the melt and removing carbon from the melt, and discharging the carbon-removed melt from the furnace and cooling the melt to obtain the second sulfide solid electrolyte.

### <Method for Reusing Sulfide Solid Electrolyte>

A method for reusing a sulfide solid electrolyte according to an embodiment of the present invention (hereinafter, also referred to as the present reusing method) includes: heating and melting a wet-pulverized sulfide solid electrolyte to obtain a melt, and removing carbon from the melt; and cooling the carbon-removed melt to obtain a sulfide solid electrolyte recycled product.

The present reusing method includes steps same as those of the present production method described above, and the "wet-pulverized sulfide solid electrolyte" in the present reusing method corresponds to the "wet-pulverized first sulfide solid electrolyte" in the present production method, and the "sulfide solid electrolyte recycled product" in the present reusing method corresponds to the second sulfide solid electrolyte" in the present production method.

The present invention is not limited to the above embodiment, and various modifications can be adopted within the scope of the present invention. For example, the present invention is not limited to the above embodiment, and may be modified and improved as appropriate. In addition, the material, shape, size, number, arrangement place, and the like of each component in the above embodiment are optional as long as the present invention can be achieved, and are not limited.

As described above, the following matters are disclosed in the present description.
[1] A method for producing a sulfide solid electrolyte, including:
   heating and melting a wet-pulverized first sulfide solid electrolyte to obtain a melt, and removing carbon from the melt; and
   cooling the carbon-removed melt to obtain a second sulfide solid electrolyte.
[2] The method for producing a sulfide solid electrolyte according [1], in which carbon is removed from the melt by introducing a sulfur source into the melt.
[3] The method for producing a sulfide solid electrolyte according to [1] or [2], in which carbon is removed from the melt by introducing a sulfur source into the wet-pulverized first sulfide solid electrolyte and heating and melting the first sulfide solid electrolyte.
[4] The method for producing a sulfide solid electrolyte according to [2] or [3], in which a sulfur amount B to be introduced with respect to a carbon amount A in the wet-pulverized first sulfide solid electrolyte satisfies A/B ≤ 0.2 in weight ratio.
[5] The method for producing a sulfide solid electrolyte according to any one of [1] to [4], in which the wet-pulverized first sulfide solid electrolyte is heated and melted at 600°C or higher to obtain the melt.
[6] The method for producing a sulfide solid electrolyte according to any one of [1] to [5], in which the wet-pulverized first sulfide solid electrolyte is heated and melted together with a sulfide solid electrolyte raw material to obtain the melt.
[7] The method for producing a sulfide solid electrolyte according to [6], in which a mixture obtained by mixing the wet-pulverized first sulfide solid electrolyte and the sulfide solid electrolyte raw material is heated and melted to obtain the melt.
[8] A method for reusing a sulfide solid electrolyte, including:
   heating and melting a wet-pulverized sulfide solid electrolyte to obtain a melt, and removing carbon from the melt; and
   cooling the carbon-removed melt to obtain a sulfide solid electrolyte recycled product.

### EXAMPLES

Hereinafter, the present invention is specifically described with reference to Examples, but the present invention is not limited thereto. Example 1 is a Comparative Example, Examples 2 and 3 are Inventive Examples in the present production method, and Example 4 is a Reference Example.

### (Lithium Ion Conductivity Evaluation)

A powder obtained in each example was further pulverized in a mortar and passed through a 100 µm mesh to obtain a sulfide solid electrolyte powder having a D50 of 10 µm in a volume-based particle size distribution, the powder was formed into a powder compact under a pressure of 380 MPa, the powder compact was used as a measurement sample, and the lithium ion conductivity was measured using an AC impedance measurement device (for example, potentiostat/galvanostat VSP, manufactured by Bio-Logic Sciences Instruments) and evaluated according to the following criteria.

Measurement conditions were a measurement frequency of 100 Hz to 1 MHz, a measurement voltage of 100 mV, and a measurement temperature of 25°C.

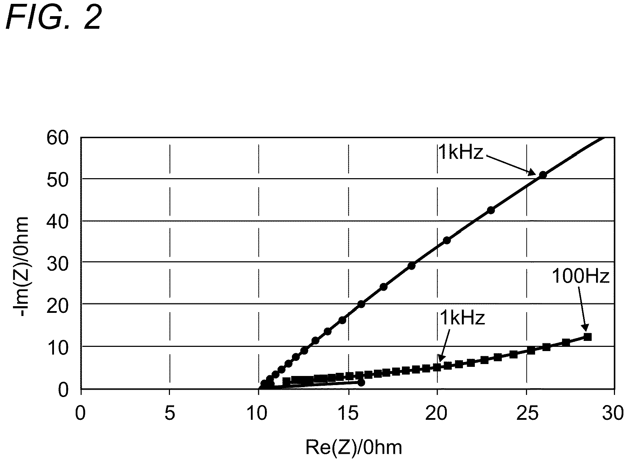

The result in each example is shown in Table 1. Note that, "-" in Table 1 means that accurate measurement is impossible since, as shown in FIG. 2, in the AC impedance measurement, in Example 1, there is no rising of an imaginary component Z' on a low frequency side, and electron blocking is not performed at an electrolyte-electrode interface, and thus there is a high possibility that not only ion conduction but also electron conduction is included in an electrical conduction function.

### (Carbon Content Measurement)

The carbon amount in the wet-pulverized first sulfide solid electrolyte and the finally obtained sulfide solid electrolyte was measured by an oxygen stream combustion-infrared absorption method using a sulfur carbon analyzer (CS844 manufactured by LECO JAPAN CORPORATION). The result in each example is shown in Table 1.

### (Appearance Color)

An appearance color of the finally obtained sulfide solid electrolyte was visually examined. The result in each example is shown in Table 1.

### (Production of Sulfide Solid Electrolyte)

### (Examples 1 to 3)

(1) First, a dry powder of coarse particles obtained by pulverizing a sulfide solid electrolyte pellet (argyrodite crystal structure, composition: Li_{5.4}PS_{4.4}Cl_{0.8}Br_{0.8}, no composition deviation, manufactured by AGC Inc.) using a cutter mill was subjected to hand mortar pulverization (coarse pulverization), and a sulfide solid electrolyte having a diameter of 100 µm or less was sorted using a sieve having an opening of 100 µm.
(2) Subsequently, a liquid medium for fine pulverization was prepared. The liquid medium was a mixed solvent (8 g) containing 5 g of heptane (prime class (dehydrated-Super-manufactured by KANTO CHEMICAL CO., INC.)) and 3 g of dibutyl ether (stabilized with BHT, manufactured by Tokyo Chemical Industry Co., Ltd.). As the mixed solvent, molecular sieves 4A 1/16 (manufactured by FUJIFILM Wako Pure Chemical Corporation) was added and allowed to stand overnight or longer, and a pre-dehydrated solvent was used.
(3) Subsequently, 8 g of the mixed solvent, 2 g of the sorted sulfide solid electrolyte, and 40 g of high purity alumina balls (AL9 series manufactured by AS ONE Corporation) having a diameter of 1 mm were charged into a 45 mL zirconia-made container (manufactured by ITO Corporation), the container was set in a small planetary ball mill LP-M4 manufactured by ITO Corporation, and wet pulverization was performed at a rotation speed of 200 rpm for 60 minutes. Thereafter, in a glove box, a stainless steel-made sieve (opening: 100 µm) was used to separate the slurry and the alumina balls, and the mixed solvent was poured several times onto the balls remaining on the sieve to wash away the balls and to collect the slurry adhering to ball surfaces.
(4) Thereafter, the slurry was allowed to stand for 3 hours to 5 hours, and the slurry from which a supernatant liquid was removed was charged into a bottle, which was then charged into a separable flask (500 mL) inserted into a mantle heater in the glove box. Then, while flowing a N₂ gas at 1.5 L/min, the slurry was heated at 150°C for 2 hours and further heated at 190°C for 4 hours to be dried.
(5) The above (2) to (4) were performed four times in total, and a dry powder of coarse particles obtained by collectively pulverizing the obtained pulverized products using a cutter mill was subjected to hand mortar pulverization (coarse pulverization), and a sulfide solid electrolyte having a diameter of 100 µm or less was sorted using a sieve having an opening of 100 µm, thereby obtaining a wet-pulverized first sulfide solid electrolyte.
(6) Into a quartz test tube, 2 g of the obtained electrolyte was charged, and an elemental sulfur powder (sulfur powder 16-60Mesh manufactured by HOSOI CHEMICAL INDUSTRY CO., LTD.) was added to the electrolyte in an amount shown in Table 1, followed by mixing.
(7) The quartz test tube was subjected to heating and melting at 730°C for 1 hour.
(8) After the heating and melting, the melt was cooled under natural cooling conditions to obtain a second sulfide solid electrolyte.
(9) The obtained second sulfide solid electrolyte was subjected to an annealing treatment at 450°C for 30 minutes.

The sulfide solid electrolyte powders in Examples 1 to 3 were thus obtained.

### Example 4

A sulfide solid electrolyte pellet (argyrodite crystal structure, composition: Li_{5.4}PS_{4.4}Cl_{0.8}Br_{0.8}, manufactured by AGC Inc.) used in Examples 1 to 3 was used as a sulfide solid electrolyte in Example 4.

**[Table 1]**

| | Carbon amount (A) (mass%) in wet-pulverized first sulfide solid electrolyte | Sulfur addition amount (B) (mass%) | A/B | Carbon amount (mass%) in finally obtained sulfide solid electrolyte | Li conductivity (mS/cm) | Appearance color |
|---|---|---|---|---|---|---|
| Example 1 | 0.63 | 0 | - | 0.33 | - | Black |
| Example 2 | 0.63 | 4 | 0.16 | 0.12 | 8.8 | White to yellow |
| Example 3 | 0.63 | 8 | 0.08 | 0.058 | 7.7 | Yellow |
| Example 4 | - | - | - | 0.044 | 8 to 10 | White to yellow |

In Examples 2 and 3 as Inventive Examples, since the step of removing carbon from the melt obtained by heating and melting the wet-pulverized first sulfide solid electrolyte was performed, the carbon amount derived from the solvent during the wet pulverization was small, and as a result, the lithium ion conductivity in the obtained second sulfide solid electrolyte was high. In addition, in Examples 2 and 3, since carbon was removed, the appearance color was white or yellow instead of black derived from carbon (soot).

On the other hand, in Example 1 as a Comparative Example, since the step of removing carbon from the melt was not performed, the carbon amount derived from the solvent during the wet pulverization was large, and as a result, the lithium ion conductivity in the finally obtained sulfide solid electrolyte was low. In addition, in Example 1, since carbon was not removed, the appearance color is also black derived from carbon (soot).

Example 4 was a Reference Example, and Example 4 was not subjected to wet pulverization, and thus the carbon amount in the sulfide solid electrolyte was small.

### INDUSTRIAL APPLICABILITY

According to the present invention, a sulfide solid electrolyte having an excellent lithium ion conductivity can be produced by a melting method using a sulfide solid electrolyte.

Although the present invention has been described in detail with reference to specific embodiments, it is apparent to those skilled in the art that various changes and modifications can be made without departing from the spirit and scope of the present invention.

The present application is based on a Japanese Patent Application (Japanese Patent Application No. 2023-112311) filed on July 7, 2023, the content of which is incorporated herein by reference.

## Claims

1. A method for producing a sulfide solid electrolyte, comprising:
heating and melting a wet-pulverized first sulfide solid electrolyte to obtain a melt, and removing carbon from the melt; and
cooling the carbon-removed melt to obtain a second sulfide solid electrolyte.

2. The method for producing a sulfide solid electrolyte according to claim 1, wherein carbon is removed from the melt by introducing a sulfur source into the melt.

3. The method for producing a sulfide solid electrolyte according to claim 1, wherein carbon is removed from the melt by introducing a sulfur source into the wet-pulverized first sulfide solid electrolyte and heating and melting the first sulfide solid electrolyte.

4. The method for producing a sulfide solid electrolyte according to claim 2 or 3, wherein a sulfur amount B to be introduced with respect to a carbon amount A in the wet-pulverized first sulfide solid electrolyte satisfies A/B ≤ 0.2 in weight ratio.

5. The method for producing a sulfide solid electrolyte according to claim 1 or 2, wherein the wet-pulverized first sulfide solid electrolyte is heated and melted at 600°C or higher to obtain the melt.

6. The method for producing a sulfide solid electrolyte according to claim 1 or 2, wherein the wet-pulverized first sulfide solid electrolyte is heated and melted together with a sulfide solid electrolyte raw material to obtain the melt.

7. The method for producing a sulfide solid electrolyte according to claim 6, wherein a mixture obtained by mixing the wet-pulverized first sulfide solid electrolyte and the sulfide solid electrolyte raw material is heated and melted to obtain the melt.

8. A method for reusing a sulfide solid electrolyte, comprising:
heating and melting a wet-pulverized sulfide solid electrolyte to obtain a melt, and removing carbon from the melt; and
cooling the carbon-removed melt to obtain a sulfide solid electrolyte recycled product.
